# EUROPEAN PATENT SPECIFICATION

(11) **EP 0 778 105 B1**
(45) Date of publication and mention of the grant of the patent: **07.06.2000**
(21) Application number: 95308946.3
(22) Date of filing: 08.12.1995
(51) Int. Cl.: B23K 9/028

(54) **Pilot probe for orbital welding apparatus**
Zentrierfutter einer Orbitalschweissvorrichtung
Centrage d'un appareil de soudage orbital

(43) Date of publication of application: 11.06.1997
(73) Proprietor: FOSTER WHEELER ENERGY CORPORATION, Clinton New Jersey 08809-4000 (US)
(72) Inventor: Van Rhyn, Lucas H., Dansville, New York 14437 (US)
(74) Representative: Rackham, Anthony Charles

(56) References cited:
- EP-A- 0 321 317
- CH-A- 408 229
- US-A- 3 754 114

## Description

This invention pertains to welding apparatus adapted for welding tubes into a tubesheet. It pertains particularly to such welding apparatus having an improved pilot probe containing spring-loaded projections for locating a welding torch precisely relative to a tube being welded leak-tightly into a tubesheet.

Multiple tubes are welded into tubesheets in many types of pressurizable tubular heat exchange equipment, including steam condensers, intercoolers, and other similar heat exchangers which require that tubes having ends near a tubesheet be reliably seam welded to the tubesheet. Such welding operations require that the welding electrode be precisely located above the tube end so as to produce leak-tight welded joints. Various welding equipment has been developed for accomplishing such welding operations, such as that disclosed by U.S.-A-2,908,805 to Apblett et al; U.S.-A-3,946,191 to Graham; U.S.-A-4,004,125 to Hood et al; U.S.-A-4,327,269 to Glatthorn; and U.S.-A-4,427,868 and US-A-4,476,367 to Kazlauskas, the latest representing the closest prior art. Although these prior patents have disclosed various welding torch configurations which have pilot members which have been found useful for welding the ends of tubes into tubesheets, various disadvantages and misalignment problems with such welding apparatus have persisted. These deficiencies have now been successfully overcome by the present invention.

According to the present invention, an orbital welding apparatus for welding tubes into a tubesheet comprises:
a housing including a handle;
a rotor unit rotatably mounted within the housing, the rotor unit carrying a gas shielded type welding electrode; and
a central pilot probe unit extending from the lower side of the housing, the pilot probe unit including an elongate, generally cylindrical body defining a longitudinal axis,
characterised in that the pilot probe unit includes at least four pairs of diametrically opposed resiliently mounted convex lateral projections, each of which normally extend radially outwardly from the outer surface of the generally cylindrical body, in that the lateral projections are spaced apart longitudinally along the pilot probe unit and in that adjacent pairs of lateral projections are angled around the longitudinal axis of the probe with respect to each other by an angle of between 30° and 90°.

The invention provides an improved orbital welding apparatus or torch specially adapted for rapidly welding tube ends into a tubesheet. The apparatus provides for precise location of the torch electrode relative to the tube end during such welding operations.

The convex surfaces or balls preferably each extend radially outwardly from the pilot outer surface by at least 0.008 inch (0.2 mm), and preferably 0.012-0.060 inches (0.3-1.5 mm).

In operation, the pilot probe unit containing a plurality of resiliently mounted convex projections or balls is inserted manually into a tube-to-be-welded into a tubesheet, so that the resiliently-mounted surfaces firmly contact the inner surface of the tube. The pilot probe unit is thereby accurately centered within the tube by action of the resiliently mounted surfaces. The centering is accomplished prior to welding the tube end to the tubesheet. Through the action of the springs, the apparatus accommodates variations in the tube inner surface. The torch apparatus rotor mechanism is then actuated, and the welding electrode produces a metal arc weld between the tube end and the tubesheet.

This invention is useful on welding machines that commonly weld metal tubes having outside diameters of about 0.50 to 2.0 inches (13-50 mm) into tubesheets. The invention is useful for arc welding tubing made of brass, copper, carbon steel, stainless steel, and titanium alloy into tubesheets.

The present invention advantageously provides an improved orbital type welding apparatus containing a pilot probe device which produces more accurate alignment for the gas shielded electrode of welding torches, and results in making more rapid and reliable welds of tubes into tubesheets.

This invention will be described by reference to the following drawings, in which:
Fig. 1 is a plan view showing the bottom of an orbital type tube welding apparatus arranged according to the invention;
Fig. 2 is a vertical view, partly in section, showing an orbital type welder having a pilot probe unit inserted into a tube and being raised above its operative position for welding the tube;
Fig. 3 is a partial cross-sectional elevational view taken at line 3-3 of Fig. 2, showing the pilot probe unit inserted and centered in a tube; and
Figs. 4, 5 and 6 are each cross-sectional views of the pilot probe unit taken at lines 4-4, 5-5 and 6-6, respectively, of Fig. 3.

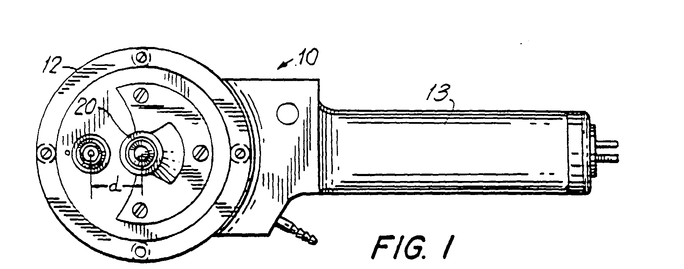

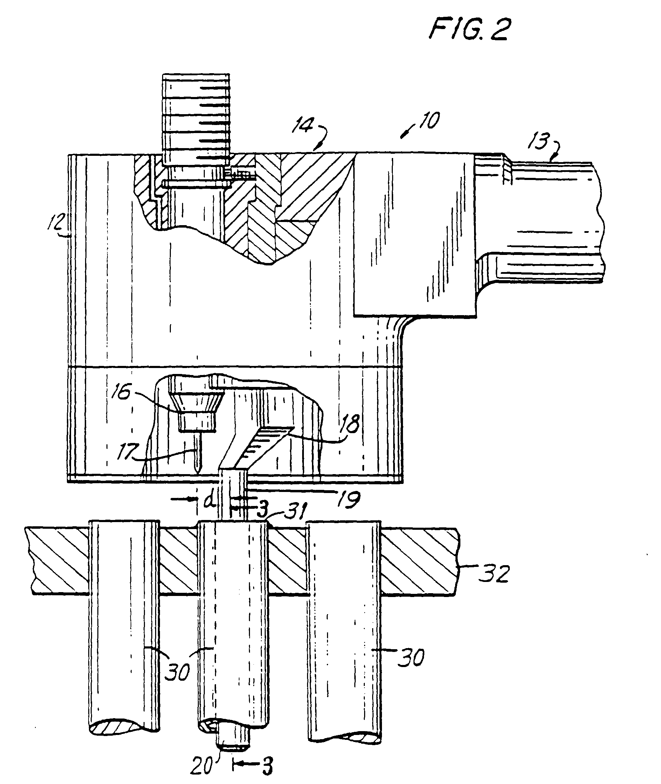

As is generally shown by Figs. 1 and 2, a welding torch assembly 10 includes a body unit 12 having a handle 13, and internal rotor 14, a welding head unit 16 containing a gas-shielded tungsten electrode 17, and a pilot probe unit 20 extending downwardly from the lower side of the body 12. The pilot probe unit 20 is attached to torch rotor 14 by a locater arm 18, which has a portion 19 that is offset from the rotor 14 centerline, so as to provide a horizontal distance (d) between the electrode 17 and the center of the offset portion 19. The distance (d) is substantially equal to the outside radius of a tube 30 to be welded into a tubesheet 32 plus a typical weld site offset of, for example, ten thousandths (0.010) of an inch (0.2 mm). The rotor and electrode units of the welding apparatus are described in greater detail in U.S.-A-3,946,191.

When the pilot probe unit 20 is inserted into one of a plurality of tubes 30 which are to be arc welded into tubesheet 32, the electrode 17 of torch unit 16 will travel around the circumference of the tube end 31 so as to weld it pressure-tightly into the tubesheet 32.

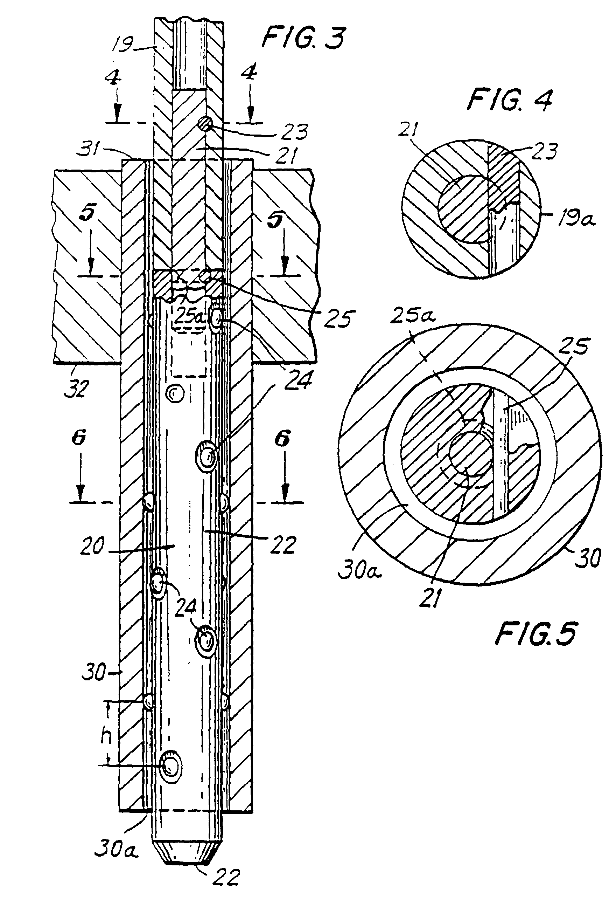

Referring now to Fig. 3, which shows the pilot probe unit 20 and tube 30 in greater detail, an elongated mandrel 22 is attached to extension 19 of torch locater arm 18 by means of a central connecting rod 21 having an upper cross-pin 23 inserted into a transverse hole which intersects the arm extension 19 and central centering rod 21. The central rod 21 is inserted into and rotatably attached to the upper end of elongated mandrel 22 by a lower transverse pin 25 which fits into a circular groove 25a in rod 21.

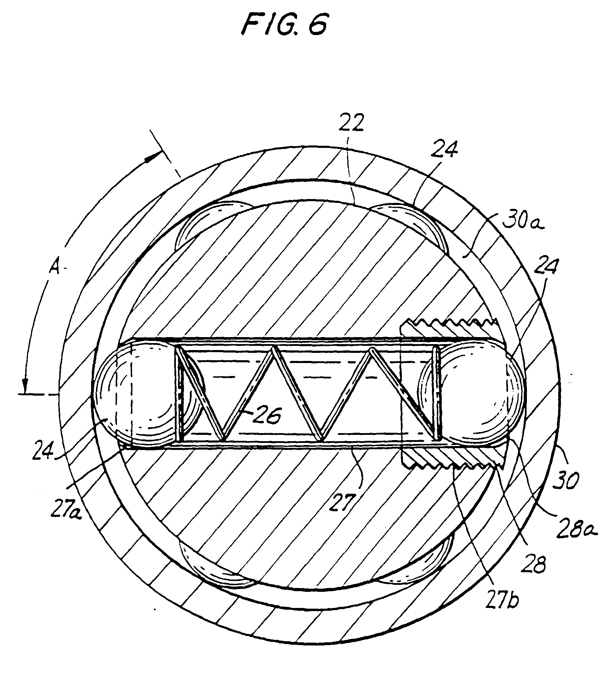

Fig. shows an enlarged cross-sectional view of the construction used for securely and removably attaching the central connecting rod 21 into arm extension 19, and Fig. 5 shows the construction for attaching the elongated outer mandrel 22 to the central connecting rod 21 and to welding torch assembly 10. Such attachment means permits removal of the pilot probe unit 20 from the welding apparatus 10 whenever needed. In the alternative, pins 23 and 25, and groove 25a, may be combined at the illustrated location of pin 23, and the central connecting rod 21 may be made unitary with mandrel 22.

The elongated mandrel 22 is provided with a plurality of convex resiliently-mounted projections or balls 24, which are substantially uniformly spaced apart along the surface of the mandrel. These balls are preferably provided in sets, each set being spring-loaded by a compression spring 26 set in transverse openings 27. Each transverse opening 27 has a smaller diameter portion 27a sized to retain the ball 24, so that the balls each extend radially outwardly from the outer surface of mandrel 22 by 0.008-0.060 inches (0.2-1.5 mm). The balls each press outwardly against the inner wall of tube 30 across a clearance 30a between the outer surface of mandrel 22 and the inner wall of tube 30, thereby providing for the pilot probe unit 20 to be centrally located with the tube 30 being welded into tubesheet 32. Preferably, the spring loaded balls 24 are substantially evenly spaced apart both circumferentially and longitudinally of the mandrel 22.

As shown in Fig. 6, one ball 24 of each set is preferably located in a small diameter portion 27a diametrically opposite a threaded member 28, which is threaded into an enlarged portion 27b at the other end of transverse opening 27. Threaded member 28 is provided with a small diameter portion 28a to retain its own ball 24.

The sets of two spring-loaded balls 24 and threaded member 28 are spaced apart longitudinally along the mandrel 22 by a distance which may advantageously be in a range between about 0.5 and 4.0 times the outside diameter of the mandrel. At least four and preferably six to eight sets of spring-loaded balls longitudinally spaced apart are used in mandrel 22 of pilot 20, with adjacent sets of balls having central axes that are angled from each other by an angle A of at least 30 degrees, and preferably 45-90 degrees.

The mandrel 22 is usually made of metal having good heat conduction and machinability characteristics, such as brass. Balls 24 are usually made of hardened steel for good wear resistance. For the compression springs 26, the spring rates are selected so as to permit ease of insertion of the probe into a tube to be welded, i.e. springs not too stiff, and providing adequate stability of the probe unit in the tube, i.e. springs not too weak. The compression springs 26 are preferably made of a heat-resistant material such as stainless steel.

Whenever it is desired to make seam welds between a tube 30 and a surrounding tubesheet 32, the pilot probe unit 20 of welder apparatus 10 is inserted manually into a tube 30, and the apparatus 10 is lowered until it contacts the work. The tube 30 has an inner diameter which is 0.020-0.040 inch (0.5-1 mm) greater than the outside diameter of mandrel 22, so that the action of the multiple spring-loaded balls 24 centers the pilot 20 in the tube 30, even though the inside of the tube may not be perfectly round. The pilot probe 20 thereby provides for the electrode 17 to be accurately aligned with the end 31 of tube 30, even if the tube is somewhat out-of-round or otherwise dimensionally irregular. The welding torch is then operated by providing inert gas shielding for the electrode 17, striking an electric arc between the electrode 17 tip end and tube end 31, then rotating the welding head unit 16 in a circular orbit around the pilot unit 20 so as to melt the tube end 31 and weld it onto the tubesheet 32.

This invention will be further described by the following Example, which should not be construed as limiting the scope.

### Example 1

A heat exchanger has a plurality of metal tubes inserted into a tubesheet preparatory to welding the tube ends to the tubesheet. An orbital type welding apparatus, such as Hobart Model No. 550, but having a pilot unit according to the current invention containing six sets of spring loaded balls, is inserted into one of the tubes, so that the welder electrode is closely aligned with the tube end adjacent the opening in the tubesheet. The welding apparatus is operated so that an electric arc is struck between the electrode and the tube, and a weld bead is formed circumferentially between the tube end and tubesheet. The welding apparatus is then removed and inserted successively into adjacent tubes, and the welding operation continued. Some important exemplary characteristics of the tube and welding apparatus are provided below:

| | |
|---|---|
| Tube inside diameter, in. | 0.500 (13 mm) |
| Tube thickness, in. | 0.030 (0.8 mm) |
| Welder pilot outside diameter, in. | 0.480 (12.2 mm) |
| Weld site offset, in. | 0.010 (0.3 mm) |
| Welder pilot length, in. | 3 (75 mm) |
| Welder pilot offset dimension "d", in. | 0.290 (7.4 mm) |
| Clearance between pilot and tube, in. | 0.010 - 0.020 (0.3-0.5 mm) |
| Spring-loaded ball diameter, in. | 0.125 (3 mm) |
| Max. radial outward movement for spring-loaded balls, in. | 0.030 (0,76 mm) |
| Spring force at max. depression of balls, 1b. | 4 - 6 (18 - 27 N) |

## Claims

1. An orbital welding apparatus (10) for welding tubes into a tubesheet, the apparatus comprising:
a housing (12) including a handle (13);
a rotor unit (14) rotatably mounted within the housing (12), the rotor unit carrying a gas shielded type welding electrode; and
a central pilot probe unit (20) extending from the lower side of the housing (12), the pilot probe unit (20) including an elongate, generally cylindrical body defining a longitudinal axis,
characterised in that the pilot probe unit (20) includes at least four pairs of diametrically opposed resiliently mounted convex lateral projections (24), each of which normally extend radially outwardly from the outer surface of the generally cylindrical body, in that the lateral projections (24) are spaced apart longitudinally along the pilot probe unit (20) and in that adjacent pairs of lateral projections (24) are angled around the longitudinal axis of the probe with respect to each other by an angle of between 30° and 90°.

2. A welding apparatus according to Claim 1, wherein each of the lateral projections (24) has an outer surface which is spherical.

3. A welding apparatus according to Claim 1 or 2, wherein the lateral projections (24) are provided in a plurality of sets of balls, each set having two spring-loaded balls retained in place by a member threaded transversely into the probe unit.

4. A welding apparatus according to any one of the preceding claims, wherein the projections (24) are spaced longitudinally by a distance equal to 0.5-4 times the pilot probe outside diameter.

5. A welding apparatus according to any one of the preceding claims, wherein the projections (24) are equally spaced along the length of the pilot probe unit.

6. A welding apparatus according to any one of the preceding claims, wherein the projections (24) extend radially outwardly from the pilot outer surface by a distance of 0.008-0.050 inch (0.2 to 1.3 mm).

## Patentansprüche

1. Eine Orbitalschweißvorrichtung (10) zum Verschweißen von Rohren mit einer Rohrplatte, aufweisend:
ein Gehäuse (12) mit einem Handgriff (13);
eine Rotoreinheit (14), die drehbar innerhalb des Gehäuses (12) gelagert ist, wobei der Rotor eine von einem Schutzgas umgebene Schweißelektrode trägt; und
ein mittiges Zentrierfutter (20), das sich vom Boden des Gehäuses (12) aus erstreckt, wobei das Zentrierfutter einen länglichen im allgemeinen zylindrischen Körper, der eine Längsachse vorschreibt, aufweist,
dadurch gekennzeichnet, daß das Zentrierfutter (20) mindestens vier Paare von diametral gegenüberliegenden federnd gelagerten konvexen seitlichen Vorsprüngen (24) aufweist, von denen jeder sich normalerweise radial von der Außenfläche des im wesentlichen zylindrischen Körpers nach außen erhebt, wobei die seitlichen Vorsprünge (24) längs des Zentrierfutters (20) verteilt sind und wobei benachbarte Paare von seitlichen Vorsprüngen (24) gegeneinander um die Längsachse des Futters mit einem Winkel zwischen 30° und 90° verdreht sind.

2. Eine Schweißvorrichtung nach Anspruch 1, bei der jeder der seitlichen Vorsprünge (24) eine sphärische Außenfläche aufweist.

3. Eine Schweißvorrichtung nach Anspruch 1 oder 2, bei der die seitlichen Vorsprünge (24) als mehrere Sätze von Kugeln ausgebildet sind, wobei jeder Satz zwei federnd gelagerte Kugeln aufweist, die von einem in das Futter eingeschraubten Bauteil an ihrem Platz gehalten werden.

4. Eine Schweißvorrichtung nach einem der vorhergehenden Ansprüche, bei der die Vorsprünge (24) in Längsrichtung mit einem Zwischenraum, der 0,5 - 4 Mal dem Außendurchmesser des Zentrierfutters entspricht, verteilt sind.

5. Eine Schweißvorrichtung nach einem der vorhergehenden Ansprüche, bei der die Vorsprünge (24) gleichmäßig über die Länge des Zentrierfutters verteilt sind.

6. Eine Schweißvorrichtung nach einem der vorhergehenden Ansprüche, bei der sich die Vorsprünge (24) radial nach außen von der Außenfläche des Zentrierfutters um eine Entfernung von 0,008 - 0,050 Zoll (0,2 bis 1,3 mm) erheben.

## Revendications

1. Appareil de soudage orbital (10) pour souder des tubes dans une plaque tubulaire, l'appareil comprenant:
un boîtier (12) comportant une poignée (13);
un bloc rotor (14) monté de manière rotative dans le boîtier (12), le bloc rotor portant une électrode de soudage du type à protection gazeuse; et
un bloc central formant sonde pilote (20) qui s'étend depuis le côté inférieur du boîtier (12), le bloc formant sonde pilote (20) comportant un corps allongé sensiblement cylindrique qui définit un axe longitudinal,
caractérisé en ce que le bloc formant sonde pilote (20) comporte au moins quatre paires de protubérances latérales convexes (24) montées de manière élastique et diamétralement opposées dont chacune s'étend normalement radialement vers l'extérieur depuis la surface extérieure du corps sensiblement cylindrique, en ce que les protubérances latérales (24) sont espacées les unes des autres dans le sens de la longueur du bloc formant sonde pilote (20), et en ce que des paires adjacentes de protubérances latérales (24) sont décalées angulairement les unes par rapport aux autres autour de l'axe longitudinal d'un angle entre 30° et 90°.

2. Appareil de soudage selon la revendication 1, dans lequel chacune des protubérances latérales (24) possède une surface extérieure sphérique.

3. Appareil de soudage selon la revendication 1 ou 2, dans lequel les protubérances latérales (24) sont prévues sous la forme de plusieurs jeux de billes, chaque jeu comportant deux billes chargées par ressort et maintenues en place par un élément vissé transversalement dans le bloc formant sonde.

4. Appareil de soudage selon l'une quelconque des revendications précédentes, dans lequel les protubérances (24) sont espacées longitudinalement d'une distance égale à 0,5-4 fois le diamètre extérieur de la sonde pilote.

5. Appareil de soudage selon l'une quelconque des revendications précédentes, dans lequel les protubérances (24) sont espacées d'une distance égale dans le sens de la longueur du bloc formant sonde pilote.

6. Appareil de soudage selon l'une quelconque des revendications précédentes, dans lequel les protubérances (24) s'étendent radialement vers l'extérieur depuis la surface extérieure du bloc formant sonde pilote sur une distance de 0,008-0,050 pouce (0,2 à 1,3 mm).
